# EUROPÄISCHE PATENTSCHRIFT

(11) **EP 0 398 297 B1**
(45) Veröffentlichungstag und Bekanntmachung des Hinweises auf die Patenterteilung: **21.09.1994**
(21) Anmeldenummer: 90109249.4
(22) Anmeldetag: 16.05.1990
(51) Int. Cl.: A22B 5/08

(54) **Enthaarungsmaschine für Schlachttiere**
Carcass dehairing machine
Machine pour le rasage d'animaux abattus

(30) Priorität: 19.05.1989 DE 3916305
(43) Veröffentlichungstag der Anmeldung: 22.11.1990
(73) Patentinhaber: Banss Maschinenfabrik GmbH & Co. KG, D-35216 Biedenkopf (DE)
(72) Erfinder: Runkel, Gerhard, D-6341 Angelburg-Gönnern (DE)
(74) Vertreter: Klunker . Schmitt-Nilson . Hirsch

(56) Entgegenhaltungen:
- EP-A- 0 146 173
- CA-A- 1 102 517
- DE-A- 2 743 521
- GB-A- 184 378
- US-A- 1 668 287

## Beschreibung

Die Erfindung bezieht sich auf eine Enthaarungsmaschine für Schlachttiere, insbesondere Schweine, mit:
(a) einer rechenartigen Abstützung für das zu enthaarende Schlachttier, die sich in Längsrichtung der Enthaarungsmaschine erstreckt;
(b) einer unter der Abstützung angeordneten, angetrieben rotierbaren Schlägerwalze, die sich in Längsrichtung der Enthaarungsmaschine erstrecht und deren Schläger durch quer zur Längsachse der Schlägerwalze verlaufende Schlitze der Abstützung ragen; und
(c) einer Einrichtung zum Freigeben des enthaarten Schlachttiers für ein Auswerfen an einer Längsseite der Enthaarungsmaschine.

Derartige Enthaarungsmaschinen sind bekannt (DE-A-32 05 106; EP-A-0 146 173 Seite 1). Für die Einrichtung zum Freigeben des Schlachttiers zum Auswerfen kennt man insbesondere zwei Bauarten, nämlich ein gitterartiges, nach oben schwenkbares Bauteil, welches das Schlachttier bei der Enthaarung in der Maschine zurückhält und im aufwärts geschwenkten Zustand zum Auswerfen freigibt, und eine Ausbildung der Abstützung mit einem seitlich hochragenden Zurückhaltebereich und mit schwenkender Absenkbarkeit der gesamten Abstützung zum Auswerfen. Außerdem kennt man Ausführungen derartiger Enthaarungsmaschinen entweder mit einer, in Längsrichtung der Maschine verlaufenden Schlägerwalze oder mit mehreren, in Längsrichtung der Enthaarungsmaschine parallel zueinander verlaufenden Schlägerwalzen. Die genannten, bekannten Bauarten bzw. Ausbildungen können je nach Wahl auch bei der erfindungsgemäßen Enthaarungsmaschine vorgesehen sein.

Bei den bekannten Enthaarungsmaschinen der eingangs genannten Art erfolgt der Einwurf von zu enthaarenden Schlachttieren auf der der Auswurf-Längsseite gegenüberliegenden Längsseite der Maschine. Hierfür sind üblicherweise hydraulisch schwenkend anhebbare Einwurfrechen vorgesehen. Diese Lösung ist konstruktiv aufwendig. Außerdem wird jeweils eine beträchtliche Zeitspanne für das Einbringen des Schlachttiers in die Maschine benötigt, was sich negativ auf die maximale Stundenleistung der Enthaarungsmaschine auswirkt.

Der Erfindung liegt die Aufgabe zugrunde, eine konstruktiv weniger aufwendige und einen rascheren Einwurf von zu enthaarenden Schlachttieren ermöglichende Enthaarungsmaschine zu schaffen.

Zur Lösung dieser Aufgabe ist die Enthaarungsmaschine erfindungsgemäß dadurch gekennzeichnet, daß an einer Stirnseite der Enthaarungsmaschine eine Einwurfrutsche mit Gefälle zum mindestens im wesentlichen in Längsrichtung der Enthaarungsmaschine erfolgenden Einwerfen von zu enthaarenden Schlachttieren vorgesehen ist.

Durch die Erfindung wird somit eine Enthaarungsmaschine verfügbar gemacht, die in neuartiger Weise einen "Längseinwurf" bzw. "stirnseitigen Einwurf" mit einem "Querauswurf" bzw. "längsseitigen Auswurf" kombiniert. Eine Einwurfrutsche ist ein wesentlich einfacheres und kostengünstigeres Bauteil als ein mit einem eigenen Antrieb ausgerüsteter Einwurfrechen. Die Zeit zum Einwerfen bzw. "Hineinrutschenlassen" eines neuen, zu enthaarenden Schlachttiers ist extrem kurz.

Es ist im Rahmen der Erfindung bevorzugt, die Einwurfrutsche derart auszuführen, daß die Schlachttiere unter dem Eigengewicht in die Enthaarungsmaschine rutschen. Es soll jedoch im Rahmen der Erfindung nicht ausgeschlossen sein, daß die Einwurfrutsche eine beliebig gestaltete Fördereinrichtung zum Hineinbefördern der Schlachttiere in die Enthaarungsmaschine aufweist.

Es sind kontinuierlich arbeitende Durchlaufenthaarungsmaschinen bekannt, bei denen die zu enthaarenden Schlachttiere an einer Stirnseite der Maschine in Längsrichtung zugefuhrt werden (DE-A-27 43 521; EP-A-0 146 173). Bei diesen Durchlaufenthaarungsmaschinen werden jedoch die Schlachttiere an der anderen Stirnseite in Längsrichtung ausgeworfen; es ist kein "Querauswurf" an einer Längsseite der Enthaarungsmaschine vorgesehen.

Insbesondere wenn der "Einwurfschwung" des aus der Einwurfrutsche in die Enthaarungsmaschine beförderten Schlachttiers nicht ausreicht, um das Schlachttier weit genug in die Maschine zu befördern, kann in Weiterbildung der Erfindung vorgesehen sein, daß die Abstützung eine Reihe von Tragsegmenten aufweist, zwischen denen sich die Schlitze befinden, und daß mindestens in einem der Einwurfrutschen-Stirnseite benachbarten Vorderbereich die Tragsegmente eine Verlaufsrichtung mit Längskomponente haben, derart, daß dort auf zu enthaarende Schlachttiere bei deren Rotation um ihre Längsachse ein Längsbewegungseffekt ausgeübt wird. Die technisch einfachste Möglichkeit für die Verlaufsrichtung mit Längskomponente besteht darin, die betreffenden Tragsegmente leicht schräg zu stellen, so daß deren Ebene mit der Längsachse der Maschine einen Winkel von beispielsweise zwischen 75 und 90° aufweist.

Die Tragsegmente im Restbereich der Abstützung, der hinter dem genannten Vorderbereich ist, können entweder keine derartige Längskomponente aufweisen, also rechtwinklig zur Längsrichtung der Enthaarungsmaschine verlaufen, oder - mindestens zum Teil - eine Verlaufsrichtung mit Längskomponente haben, die kleiner als die Längskomponente im genannten Vorderbereich ist. Es ist möglich, daß die Längskomponente der Verlaufsrichtung - fortschreitend in Längsrichtung der Maschine - von Tragsegment zu Tragsegment sozusagen kontinuierlich abnimmt oder von Tragsegmentgruppe zu Tragsegmentgruppe stufenweise abnimmt.

In bevorzugter Ausgestaltung der Erfindung hat die Enthaarungsmaschine eine für zwei längs hintereinander liegende Schlachttiere ausreichende Länge. In diesem Fall werden die beiden Schlachttiere - in der Regel unmittelbar - nacheinander in die Maschine eingeworfen. Auch in diesem Fall kann es ausreichend sein, im genannten Vorderbereich Tragsegmente mit Längskomponente der Verlaufsrichtung vorzusehen, weil das als zweites eingeworfene Schlachttier das als erstes eingeworfene Schlachttier in Längsrichtung der Maschine weiterdrückt.

Besonders bevorzugt ist in diesem Fall jedoch das Vorsehen von Tragsegmenten mit Längskomponente der Verlaufsrichtung jeweils am Anfang der beiden Halbbereiche der Maschine. Es gibt ferner die Möglichkeit Tragsegmente mit Längskomponente der Verlaufsrichtung nur am Anfang des zweiten, hinteren Halbbereichs der Maschine vorzusehen, weil der Einwurf zum vorderen, ersten Halbbereich der Maschine normalerweise aufgrund der Einwurfrutsche ausreichend funktioniert und es bei der vergleichsweise langen Zwei-Schlachttier-Maschine in erster Linie nur darauf ankommt, eines der beiden Schlachttiere zuverlässig zu dem zweiten, hinteren Halbbereich zu befördern.

Es versteht sich, daß auch bei der Zwei-Schlachttier-Maschine die in den Ansprüchen 3 bis 5 angeführten Weiterbildungsmerkmale verwirklicht sein können, und zwar bezogen jeweils auf die Halbbereiche der Maschine.

Die Enthaarungsmaschine weist vorzugsweise nach unten gerichtete Sprühdüsen für warmes Wasser zur Fortsetzung des Brühens eines in der Enthaarungsmaschine befindlichen Schlachttiers auf. Auf diese Weise kann man in der Enthaarungsmaschine das in einer vorgeschalteten Vorrichtung begonnene Brühen fortsetzen. Ein typisches Beispiel sind 5 bis 7 Min. Gesamtbrühzeit, wovon 3 bis 5 Min. in der vorgeschalteten Vorrichtung und 1 bis 2 Min. in der Enthaarungsmaschine stattfinden. Infolgedessen kann die vorgeschaltete Einrichtung für eine geringere Durchlaufleistung ausgelegt sein, was eine erhebliche Einsparung an Investitionskosten mit sich bringt. Schließlich hat man in der Enthaarungsmaschine Brühwasser, welches von dem Brühwasser der vorgeschalteten Vorrichtung unabhängig und daher sauberer ist.

Es ist bevorzugt, in der Enthaarungsmaschine mit umgewälztem und vorzugsweise beim Umwälzen gefiltertem Brühwasser zu arbeiten. Typische Brühwassertemperaturen liegen im Bereich von etwa 60°C.

Eine typische Durchsatzleistung der erfindungsgemäßen Enthaarungsmaschine beträgt bis 150 Schlachttiere pro Stunde.

Die Erfindung und Ausgestaltungen der Erfindung werden nachfolgend anhand eines zeichnerisch dargestellten Ausführungsbeispiels noch näher erläutert. Es zeigt:
- Figur 1: eine Seitenansicht einer Enthaarungsmaschine, gesehen auf eine der beiden Längsseiten;
- Figur 2: eine stirnseitige Ansicht der Enthaarungsmaschine von Fig. 1;
- Figur 3: eine Draufsicht der Enthaarungsmaschine von Fig. 1 und 2.

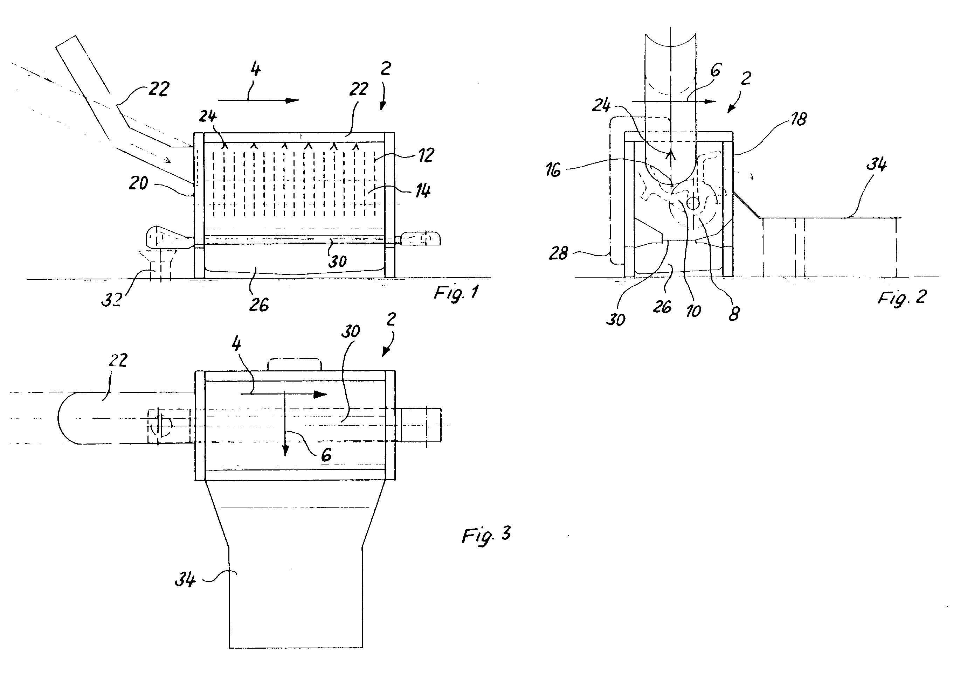

Die in den Zeichnungsfiguren dargestellte Enthaarungsmaschine 2 hat eine mit dem Pfeil 4 gekennzeichnete Längsrichtung und eine mit dem Pfeil 6 gekennzeichnete Querrichtung. Eine Schlägerwalze 8, die in axial verteilten Reihen auf federnden Flachstählen angebrachte Schläger beispielsweise aus hartem Gummi aufweist, ist mit ihrer Achse in Längsrichtung der Maschine 2 verlaufend angeordnet, und zwar in Fig. 2 gesehen nach rechts versetzt gegenüber der aufrechten Längsmittelebene der Maschine 2. In Fig. 1 ist der Außenumfang der Schlägerwalze 8 mit strichpunktierten Linien angedeutet. Eine rechenartige Abstützung 10 erstreckt sich im wesentlichen über die Gesamtlänge der Maschine 2 und weist in Fig. 1 mit gestrichelten Linien angedeutete, rechtwinklig zur Längsrichtung 4 der Maschine 2 verlaufende Tragsegmente 12 auf, zwischen denen Schlitze 14 sind, die ebenfalls rechtwinklig zur Längsrichtung 4 der Maschine 2 verlaufen. In der Stirnansicht gemäß Fig. 2 weist die Abstützung einen muldenartig vertieften, mittleren Bereich 16 auf, der die nicht eingezeichneten, zu enthaarenden Schlachttiere aufnimmt. In Fig. 2 links und rechts von dem muldenartigen Bereich 16 verläuft die Abstützung 10 links nach schräg-oben und rechts im wesentlichen vertikal nach oben. Die Abstützung 10 führt unter dem massiven Wellen-Zentralbereich der Schlägerwalze 8 hindurch. Die Abstützung 10 kann um eine in Fig. 2 linke, nicht eingezeichnete, in Längsrichtung 4 der Maschine 2 verlaufende Achse im Uhrzeigersinn so weit abgesenkt werden, daß der in Fig. 2 rechte, aufrechte Bereich eine untere, praktisch waagerechte oder nur noch leicht aufwärtsführende Lage einnimmt. In dieser Situation sind die enthaarten Schlachttiere freigegeben für ein Auswerfen an der in Fig. 2 rechten Längsseite 18 der Maschine 2. An dieser Auswurfseite ist die Maschine 2 entweder offen oder mit einer oben angeschlagenen Tür, beispielsweise aus durchsichtigem Kunststoff, versehen, die von dem ausgeworfenen Schlachttier selbsttätig von innen nach außen geöffnet wird und danach in ihre Vertikallage zurückfällt.

Die Schläger der Schlägerwalze 8 greifen durch die Schlitze 14. Die Schlägerwalze 8 ist mittels eines nicht eingezeichneten Elektromotors drehend antreibbar. Somit üben die Schläger der Schlägerwalze 8 nicht nur eine schabende Enthaarungswirkung auf die Schlachttiere aus, sondern versetzen die Schlachttiere auch in eine Rotationsbewegung um deren Längsachse, so daß im Verlauf der Aufenthaltszeit in der Maschine 2 der gesamte Schlachttierumfang enthaart wird.

An der in Fig. 1 linken Stirnseite 20 der Maschine 2 ist eine Einwurfrutsche 22 angebracht, die mit Gefälle zu dieser Stirnseite 20 hin verläuft. Mit durchgehenden Linien ist eine Variante der Einwurfrutsche 22 eingezeichnet, die nahe der Maschine 2 ein erstes Gefälle und weiter von der Maschine 2 entfernt ein zweites steileres Gefälle aufweist. Mit strichpunktierten Linien ist eine Variante mit durchgehend gleichbleibendem Gefälle eingezeichnet. Insbesondere bei der mit durchgezogenen Linien gezeichneten Variante kann die Funktion so sein, daß Schlachttiere der Reihe nach mit einem in Fig. 1 von rechts nach links arbeitenden Förderer mit dem Kopf nach unten hängend ankommen und dann, wenn sie sich an oder nahe dem Bereich mit stärkerem Gefälle befinden, oben abgehängt werden. Die so oder auf andere Weise auf die Einwurfrutsche 12 gelangten Schlachttiere rutschen unter ihrem Eigengewicht von der Stirnseite 20 der Maschine 2 her im wesentlichen in deren Längsrichtung 4 in die Maschine 2 hinein. Die Stirnseite 20 ist selbstverständlich in dem dafür erforderlichen Bereich offen. Es wird darauf hingewiesen, daß zum Bereich der Erfindung auch solche Einwurfrutschen 22 gehören, die beispielsweise unmittelbar vor der Maschine 2 praktisch waagerecht verlaufen. Funktionell kommt es lediglich darauf an, daß die Schlachttiere mit genügender Geschwindigkeit durch die Einwurfrutsche 22 im wesentlichen in Längsrichtung 4 in die Maschine 2 gelangen.

Die gezeichnete Maschine 2 kann so lang sein, daß sie Platz für zwei Schlachttiere in Längsrichtung hintereinander bietet, die gleichzeitig enthaart werden. Insbesondere in diesem Fall kann es nützlich sein, wenn mindestens einige der Tragsegmente 12 so ausgebildet sind, daß sie während der Rotation des betreffenden Schlachttiers einen Längsbewegungseffekt auf dieses ausüben. In den meisten Fällen ist es ausreichend, wenn zu diesem Zweck einige Tragsegmente etwa in der Mitte der Maschine 2 leicht schräggestellt sind, so daß sie nicht mehr rechtwinklig zur Längsrichtung 4 der Maschine 2 verlaufen. Das jeweils erste von zwei eingeworfenen Schlachttieren gelangt mit seinem in Einwurfrichtung vorderen Ende in den Bereich der schräggestellten Tragsegmente 12 und wird dadurch sukzessive bis zu der Einwurf-Stirnseite 20 entgegengesetzten Stirnseite der Maschine 2 befördert. Das als zweites eingeworfene Schlachttier kommt durch die Einrutschbewegung von selbst in die richtige Enthaarungsposition.

Es wird darauf hingewiesen, daß eine "Längsbewegungshilfe" der geschilderten Art auch bei Maschinen 2 vorgesehen sein kann, die nur für die Bearbeitung eines Schlachttiers zur gleichen Zeit ausgelegt ist. Außerdem kommen die in den Ansprüchen und in der Beschreibungseinleitung genannten Varianten der Tragsegmente mit Längskomponente ihrer Verlaufsrichtung in Betracht. Bei alledem gilt der Auslegungsgesichtspunkt, daß die Schlachttiere zuverlässig in den für die Enthaarung bestimmten Bereich gelangen; eine zu starke oder weitgehende Förderbewegung durch die Tragsegmente in Längsrichtung 4 der Maschine 2 ist nicht erwünscht, weil das Schlachttier bzw. das vordere der beiden Schlachttiere nur unnötig gegen die der Stirnseite 20 gegenüberliegende Stirnseite der Maschine 2 gedrückt würde.

In Fig. 1 und 2 erkennt man, daß unten an der oberen Abschlußwand 22 der Maschine 2 mehrere, nach unten gerichtete Sprühdüsen 24 für Warmwasser in Längsrichtung 4 der Maschine 2 verteilt angebracht sind. Der untere Bereich der Maschine 2 ist als Wassersammelbecken 26 ausgebildet. Von dem Wassersammelbecken 26 führt an der in Fig. 2 linken Außenseite der Maschine 2 eine oben verzweigte Pumpleitung 28 zu den Sprühdüsen 24, wobei in der Pumpleitung 28 eine nicht eingezeichnete Pumpe eingebaut ist. Eine nicht eingezeichnete Heizeinrichtung dient dazu, das auf diese Weise umgewälzte Brühwasser auf der für das Brühen erforderlichen Temperatur zu halten.

Zwischen der Schlägerwalze und dem Wassersammelbecken 26 ist in Längsrichtung 4 der Maschine 2 verlaufendes Transportband 30 angeordnet. Dieses besteht beispielsweise aus Metallgewebe und wirkt als Filter für das von den Schlachttieren herabkommende, mit von den Schlachttieren entfernten Borsten belastete Brühwasser. Das endlose Borstentransportband 30 ist mindestens an einer Stirnseite der Maschine 2 aus dieser herausgeführt. Im dortigen Umlenkbereich werden die auf dem Band befindlichen Borsten abgestriffen und in einen Borsteneinwurftrichter 32 abgegeben.

Die an der Längsseite 18 ausgeworfenen Schlachttiere gelangen über eine abwärtsführende Schrägfläche auf einen Auswurftisch 34.

## Patentansprüche

1. Enthaarungsmaschine (2) für Schlachttiere, insbesondere Schweine, mit:
(a) einer rechenartigen Abstützung (10) für das zu enthaarende Schlachttier, die sich in Längsrichtung der Enthaarungsmaschine (2) erstreckt;
(b) einer unter der Abstützung (10) angeordneten, angetrieben rotierbaren Schlägerwalze (8), die sich in Längsrichtung der Enthaarungsmaschine (2) erstreckt und deren Schläger durch quer zur Längsachse der Schlägerwalze (8) verlaufende Schlitze (14) der Abstützung (10) ragen; und
(c) einer Einrichtung zum Freigeben des enthaarten Schlachttiers für ein Auswerfen an einer Längsseite (18) der Enthaarungsmaschine (2),
dadurch gekennzeichnet,
(d) daß an einer Stirnseite (20) der Enthaarungsmaschine (2) eine Einwurfrutsche (22) mit Gefälle zum mindestens im wesentlichen in Längsrichtung der Enthaarungsmaschine (2) erfolgenden Einwerfen von zu enthaarenden Schlachttieren vorgesehen ist.

2. Enthaarungsmaschine nach Anspruch 1,
dadurch gekennzeichnet,
daß die Abstützung (10) eine Reihe von Tragsegmenten (12) aufweist, zwischen denen sich die Schlitze (14) befinden, und daß mindestens in einem der Einwurfrutschen-Stirnseite (20) benachbarten Vorderbereich die Tragsegmente (12) eine Verlaufsrichtung mit Längskomponente haben, derart, daß dort auf zu enthaarende Schlachttiere bei deren Rotation um ihre Längsachse ein Längsbewegungseffekt ausgeübt wird.

3. Enthaarungsmaschine nach Anspruch 2,
dadurch gekennzeichnet,
daß die Tragsegmente (12) hinter dem Vorderbereich der Abstützung (10) rechtwinklig zur Längsrichtung der Enthaarungsmaschine (2) verlaufen.

4. Enthaarungsmaschine nach Anspruch 2,
dadurch gekennzeichnet,
daß im Restbereich der Abstützung (10), der hinter dem Vorderbereich ist, weitere Tragsegmente (12) vorgesehen sind, die eine Verlaufsrichtung mit Längskomponente haben, wobei hier die Längskomponente kleiner als im Vorderbereich ist.

5. Enthaarungsmaschine nach Anspruch 4,
dadurch gekennzeichnet,
daß im Restbereich die Längskomponente der Verlaufsrichtung der Tragsegmente (12) - fortschreitend in Längsrichtung der Enthaarungsmaschine (2) - kontinuierlich oder stufenweise abnimmt.

6. Enthaarungsmaschine nach einem der Ansprüche 1 bis 5,
dadurch gekennzeichnet,
daß sie eine für zwei längs hintereinander liegende Schlachttiere ausreichende Länge hat.

7. Enthaarungsmaschine nach Anspruch 6,
dadurch gekennzeichnet,
daß die Abstützung (10) eine Reihe von Tragsegmenten (12) aufweist, zwischen denen sich die Schlitze (14) befinden; und daß im vorderen oder hinteren oder beiden Halbbereich(en) mindestens vorn einige Tragsegmente (12) vorgesehen sind, die eine Verlaufsrichtung mit Längskomponente haben, derart, daß dort auf zu enthaarende Schlachttiere bei deren Rotation um ihre Längsachse ein Längsbewegungseffekt ausgeübt wird.

8. Enthaarungsmaschine nach einem der Ansprüche 1 bis 7,
dadurch gekennzeichnet,
daß in ihrem oberen Bereich nach unten gerichtete Sprühdüsen (24) für warmes Wasser zur Fortsetzung des Brühens eines in der Enthaarungsmaschine (2) befindlichen Schlachttiers angeordnet sind.

## Claims

1. A dehairing machine (2) for carcasses, in particular of pigs, comprising:
(a) a comb-like support (10) for the carcass to be dehaired, extending in the longitudinal direction of the dehairing machine (2);
(b) a driven, rotatable scraper roll (8) disposed underneath the support (10) and extending in the longitudinal direction of the dehairing machine (2) and the scrapers thereof projecting through slots (14) of the support (10) extending transversely of the longitudinal axis of the scraper roll (8); and
(c) a means for releasing the dehaired carcass for ejection thereof on a longitudinal side (18) of the dehairing machine (2),
characterized in
(d) that a sloping introduction chute (22) for introduction of carcasses for dehairing at least substantially in the longitudinal direction of the dehairing machine (2) is provided on a face side (20) of the dehairing machine (2).

2. A dehairing machine according to claim 1,
characterized in that the support (10) comprises a series of supporting segments (12) between which the slots (14) are located, and in that the supporting segments, at least in a front portion adjacent the introduction chute face side (20), have a direction of extension with a longitudinal component such that a longitudinal movement effect is exerted there on carcasses to be dehaired upon rotation thereof about their longitudinal axis.

3. A dehairing machine according to claim 2,
characterized in that the supporting segments (12), subsequently to the front portion of the support (10), extend at right angles to the longitudinal direction of the dehairing machine (2).

4. A dehairing machine according to claim 2,
characterized in that, in the remaining portion of the support (10) located behind the forward portion, there are provided further supporting segments (12) having a direction of extension with a longitudinal component, said longitudinal component being smaller here than in the forward portion.

5. A dehairing machine according to claim 4,
characterized in that, in said remaining portion, the longitudinal component of the direction of extension of the supporting segments (12) - progressing in the longitudinal direction of the dehairing machine (2) - decreases in continuous or stepped manner.

6. A dehairing machine according to any one of claims 1 to 5,
characterized in that it has a length sufficient for two carcasses lying behind one another in the longitudinal direction.

7. A dehairing machine according to claim 6,
characterized in that the support (10) comprises a series of supporting segments (12) between which the slots (14) are located; and in that, in the forward or rear or in both half portion(s), there are provided at least at the front some supporting segments (12) having a direction of extension with a longitudinal component such that a longitudinal movement effect is exerted there on carcasses to be dehaired upon rotation thereof about their longitudinal axis.

8. A dehairing machine according to any one of claims 1 to 7,
characterized in that, in the upper portion thereof, there are disposed downwardly directed spraying nozzles (24) for hot water for continuing the scalding operation of a carcass located in the dehairing machine (2).

## Revendications

1. Machine à débourrer (2) pour animaux de boucherie, en particulier des porcs, comportant :
(a) un appui (0) en grille pour l'animal à débourrer qui s'étend dans la direction longitudinale de la machine à débourrer (2)
(b) un rouleau à marteaux (8) entraîné an rotation, placé sous l'appui (10), qui s'étend dans la direction longitudinale de la machine a débourrer (2) et dont les marteaux traversent des fentes (14) de l'appui (10), s'étendant transversalement à l'axe longitudinal du rouleau (8) ; et
(c) un dispositif de libération de l'animal débourré pour l'éjecter sur un grand côté (18) de la machine à débourrer (2),
caractérisé en ce que
(d) sur un côté frontal (20) de la machine à débourrer (2) il est prévu une glissière d'introduction (22) avec pente pour l'introduction, se produisant au moins essentiellement dans la direction longitudinale de la machine à débourrer (2), d'animaux de boucherie à débourrer.

2. Machine à débourrer selon la revendication 1, caractérisée en ce que l'appui (10) comporte une série de segments de support (12) entre lesquels se trouvent les fentes (14) et en ce qu'au moins dans une zone avant, voisine du côté frontal (20) de la glissière d'introduction, les segments de support (12) ont une direction à composante longitudinale telle qu'un effet de déplacement longitudinal s'exerce sur les animaux à débourrer, lors de leur rotation autour de leur axe longitudinal.

3. Machine à débourrer selon la revendication 2, caractérisée en ce que les segments de support (12) derrière la zone avant de l'appui (10) s'étendent à angle droit par rapport à la direction longitudinale de la machine à débourrer (2).

4. Machine à débourrer selon la revendication 2, caractérisée en ce que dans la zone restante de l'appui (10), qui se trouve derrière la zone avant, il est prévu d'autres segments de support (12) qui ont une direction à composante longitudinale, celle-ci étant ici inférieure à celle de la zone avant.

5. Machine à débourrer selon la revendication 4, caractérisée en ce que dans la zone restante la composante longitudinale de la direction des segments de support (12) - en progressant dans la direction longitudinale de la machine à débourrer (2) - diminue en continu ou progressivement.

6. Machine à débourrer selon l'une des revendications 1 à 5, caractérisée en ce qu'elle présente une longueur suffisante pour deux animaux de boucherie se trouvant l'un derrière l'autre dans la longueur.

7. Machine à débourrer selon la revendication 6, caractérisée en ce que l'appui (10) comporte une série de segments de support (12) entre lesquels se trouvent les fentes (14) et en ce que dans la zone avant ou la zone arrière ou les deux demi-zones il est prévu au moins à l'avant quelques segments de support (12) dont la direction possède une composante longitudinale telle qu'à cet endroit un effet de déplacement longitudinal soit exercé pendant leur rotation autour de leur axe longitudinal.

8. Machine à débourrer selon l'une des revendications 1 à 7, caractérisée en ce qu'il est prévu dans sa zone supérieure des buses de pulvérisation (24) dirigées vers le bas, pour l'eau chaude, destinées à continuer la échaudure d'un animal de boucherie se trouvant dans la machine à débourrer (2).
